# EUROPÄISCHE PATENTSCHRIFT

(11) **EP 4 082 058 B1**
(45) Veröffentlichungstag und Bekanntmachung des Hinweises auf die Patenterteilung: **27.03.2024**
(21) Anmeldenummer: 20824163.8
(22) Anmeldetag: 08.12.2020
(51) Int. Cl.: H01M 8/0206, H01M 8/0258, H01M 8/0267, H01M 8/0271, H01M 8/0273, H01M 8/0297, H01M 8/0284

(54) **VERFAHREN ZUM HERSTELLEN EINER MEHRLAGIGEN BIPOLARPLATTE FÜR EINE ELEKTROCHEMISCHE VORRICHTUNG UND BIPOLARPLATTE FÜR EINE ELEKTROCHEMISCHE VORRICHTUNG**
METHOD FOR PRODUCING A MULTILAYER FLOW FIELD PLATE FOR AN ELECTROCHEMICAL DEVICE, AND FLOW FIELD PLATE FOR AN ELECTROCHEMICAL DEVICE
PROCÉDÉ DE PRODUCTION D'UNE PLAQUE DE CHAMP D'ÉCOULEMENT MULTICOUCHE POUR UN DISPOSITIF ÉLECTROCHIMIQUE, ET PLAQUE DE CHAMP D'ÉCOULEMENT POUR UN DISPOSITIF ÉLECTROCHIMIQUE

(30) Priorität: 23.12.2019 DE 102019135785
(43) Veröffentlichungstag der Anmeldung: 02.11.2022
(73) Patentinhaber: EKPO Fuel Cell Technologies GmbH, 72581 Dettingen/Erms (DE)
(72) Erfinder: STAHL, Peter, 72555 Metzingen (DE); KRAFT, Jürgen, 72555 Metzingen (DE)
(74) Vertreter: Hoeger, Stellrecht & Partner Patentanwälte mbB
(86) Internationale Anmeldenummer: PCT/EP2020/085117
(87) Internationale Veröffentlichungsnummer: WO 2021/130016

(56) Entgegenhaltungen:
- DE-A1-102013 204 308
- DE-A1-102014 104 017
- DE-A1-102016 208 378
- DE-A1-102017 115 873
- JP-A- 2007 026 737

## Beschreibung

Die vorliegende Erfindung betrifft ein Verfahren zum Herstellen einer mehrlagigen Bipolarplatte für eine elektrochemische Vorrichtung, wobei das Verfahren Folgendes umfasst:
- Erzeugen mindestens eines Dichtelements aus einem elastischen Material an einer ersten Bipolarplattenlage der Bipolarplatte; und
- Verbinden der ersten Bipolarplattenlage der Bipolarplatte mit dem daran erzeugten Dichtelement und einer zweiten Bipolarplattenlage der Bipolarplatte durch Verschweißung mittels einer Schweißenergiequelle längs mindestens einer Verbindungs-Schweißnaht.

Die elektrochemische Vorrichtung, in welcher die Bipolarplatte zum Einsatz kommt, umfasst vorzugsweise einen Stapel aus mehreren längs einer Stapelrichtung aufeinanderfolgenden elektrochemischen Einheiten, welche jeweils eine Bipolarplatte umfassen.

Die elektrochemische Vorrichtung, in welcher die hergestellte Bipolarplatte zum Einsatz kommt, ist beispielsweise als eine Brennstoffzellenvorrichtung, als ein Elektrolyseur oder als ein Batteriezellenstapel ausgebildet.

Bei bekannten Verfahren zum Herstellen einer mehrlagigen Bipolarplatte, bei welchen an einer der Bipolarplattenlagen ein Dichtelement aus einem elastischen Material angebunden ist, ist die Bipolarplatte so aufgebaut, dass Dichtlinien und Schweißlinien - längs der Stapelrichtung des Stapels aus elektrochemischen Einheiten gesehen - sich nicht kreuzen oder berühren, da dies zu einer Beschädigung des Dichtelements durch den Wärmeeintrag beim Schweißvorgang führen kann. Insbesondere kann eine Verbrennung des Dichtelements, eine Bildung von Blasen im Material des Dichtelements und/oder eine Kontamination des Dichtelements auftreten.

Wenn das Dichtelement sich auf der von der Schweißenergiequelle abgewandten Seite der Bipolarplatte befindet, so kann eine solche Beschädigung des Dichtelements insbesondere dadurch auftreten, dass sich auf der Seite der Bipolarplatte, auf welcher das Dichtelement angeordnet ist, ein Schmelzbad bildet, aus dem Schweißgase und/oder Schweißstaub entweichen.

Außerdem können im Bereich der Verbindungs-Schweißnaht, vor allem dort, wo sich während des Schweißvorgangs ein Schmelzbad befindet, Abplatzungen von Schweißresten, beispielsweise Zunderschichten, auftreten.

Wenn sich ein Schweißbad auf der Seite der Bipolarplatte befindet, auf der das Dichtelement angeordnet ist, so ist auf dieser Seite der Bipolarplatte kein dem Schweißvorgang nachgelagerter Reinigungsvorgang möglich.

Aus dem Schweißvorgang stammende Verschmutzungen des Dichtelements oder eines Grundmaterials der Bipolarplatte können die Funktion der elektrochemischen Vorrichtung stark beeinflussen. Außerdem können solche Verschmutzungen zu Problemen bei der Assemblierung der elektrochemischen Vorrichtung führen, beispielsweise durch das Entstehen von Spalten zwischen den Bauteilen.

Dadurch, dass sich die Schweißnähte und Dichtlinien der Bipolarplatte bei den bekannten Verfahren zur Herstellung einer mehrlagigen Bipolarplatte - längs der Stapelrichtung gesehen - weder kreuzen, überlappen noch berühren, muss überall ein Abstand zwischen den Dichtlinien und den Schweißnähten vorgesehen werden, wodurch der Platzbedarf für das Dichtungssystem und das System der Verbindungs-Schweißnähte an der Bipolarplatte ansteigt. Die Gestaltungsfreiheit beim Aufbau der elektrochemischen Einheit wird stark eingeschränkt durch die Voraussetzung, dass sich die Dichtlinien und die Verbindungs-Schweißnähte nicht kreuzen dürfen.

Das Dichtelement hat eine räumliche Ausdehnung seitlich über die Dichtlinie hinaus und gegebenenfalls zwischen mehreren Dichtlinien und kann dort die Funktion einer elektrischen Isolation erfüllen.

Dort, wo sich an der Bipolarplatte Verbindungs-Schweißnähte befinden, können bei den bekannten Herstellungsverfahren Bereiche entstehen, in denen aufgrund des Fehlens von Dichtungsmaterial die Gefahr einer elektrisch leitenden Kontaktierung zweier in der Stapelrichtung benachbarter elektrochemischer Einheiten besteht, was einen verminderten Isolationswiderstand oder gar einen Kurzschluss zwischen den elektrochemischen Einheiten zur Folge hat. Dies stellt ein Problem für die Sicherheit im Betrieb der elektrochemischen Vorrichtung dar.

Die DE 10 2013 204 308 A1 offenbart ein Verfahren zum Herstellen einer mehrlagigen Bipolarplatte für eine elektrochemische Vorrichtung gemäß dem Oberbegriff von Anspruch 1.

Die JP 2007 026737 A offenbart ein Verfahren zum Herstellen einer mehrlagigen Bipolarplatte für eine elektrochemische Vorrichtung, wobei eine Dichtlinie und eine Schweißlinie, längs welcher mehrere Lagen der Bipolarplatte miteinander verbunden sind, einander in einer Projektion längs der Stapelrichtung der elektrochemischen Vorrichtung nicht überlappen.

Die DE 10 2016 208 378 A1 offenbart ein Verfahren zur Herstellung einer Bipolarplatte, bei welchem Verbindungsnähte durch Schweißen zwischen Einzelplatten der Bipolarplatte hergestellt werden und Dichtungen auf den Einzelplatten hergestellt werden.

Die DE 10 2017 115 873 A1 und die DE 10 2014 104 017 A1 offenbaren Verfahren zur Herstellung einer Bipolarplatte und eine Bipolarplatte, die geschweißt und durch ein Elastomer abgedichtet ist.

Der vorliegenden Erfindung liegt die Aufgabe zugrunde, ein Verfahren zum Herstellen einer mehrlagigen Bipolarplatte für eine elektrochemische Vorrichtung der eingangs genannten Art zu schaffen, bei welchem eine Beeinträchtigung eines an der ersten Bipolarplattenlage erzeugten Dichtelements durch einen anschließenden Schweißvorgang zuverlässig vermieden wird und vorzugsweise die Gestaltungsfreiheit beim Aufbau der elektrochemischen Einheit vergrößert wird.

Diese Aufgabe wird bei einem Verfahren mit den Merkmalen des Oberbegriffs von Anspruch 1 erfindungsgemäß dadurch gelöst, dass während des Schweißvorgangs die zweite Bipolarplattenlage der Schweißenergiequelle zugewandt ist und während des Schweißvorgangs ein mittels der Schweißenergiequelle erzeugtes Schmelzbad die erste Bipolarplattenlage nicht vollständig durchdringt.

Der vorliegenden Erfindung liegt somit das Konzept zugrunde, die erste Bipolarplattenlage und die zweite Bipolarplattenlage so zu gestalten und/oder den Schweißvorgang so auszuführen, dass sich das Schmelzbad während des Schweißvorgangs nur auf der der Schweißenergiequelle zugewandten Seite der Bipolarplatte befindet. Die der Schweißenergiequelle abgewandte Seite der Bipolarplattenlage, an welcher das Dichtelement angeordnet ist, bleibt unbeschädigt. Insbesondere bilden sich auf dieser Seite keine Schweißraupe, keine Verschmutzungen und/oder kein Zunder aus.

Sofern auf der der Schweißenergiequelle zugewandten Seite der Bipolarplatte während des Schweißvorgangs Verschmutzungen entstehen, können dieselben nach dem Schweißvorgang durch einen Reinigungsvorgang entfernt werden, da sich auf dieser Seite der Bipolarplatte kein elastisches Dichtungsmaterial befindet.

Bei einer bevorzugten Ausgestaltung der Erfindung ist vorgesehen, dass im Bereich der Verbindungs-Schweißnaht die Materialstärke H₁ der ersten Bipolarplattenlage größer ist als die Materialstärke H₂ der zweiten Bipolarplattenlage.

Bei einer besonderen Ausgestaltung der Erfindung ist ferner vorgesehen, dass im Bereich der Verbindungs-Schweißnaht eine Wärmeleitungsbeschichtung vorgesehen ist.

Das Material der Wärmeleitungsbeschichtung weist eine höhere Wärmeleitfähigkeit auf als das Material der ersten Bipolarplattenlage und/oder als das Material der zweiten Bipolarplattenlage.

Vorzugsweise wird die Wärmeleitungsbeschichtung an der ersten Bipolarplattenlage gebildet, bevor die erste Bipolarplattenlage mit der zweiten Bipolarplattenlage verschweißt wird.

Bei einer bevorzugten Ausgestaltung der Erfindung ist vorgesehen, dass eine Dichtlinie des Dichtelements an der ersten Bipolarplattenlage sich mit der Verbindungs-Schweißnaht - längs der Stapelrichtung der elektrochemischen Vorrichtung gesehen - überlappt.

Insbesondere kann vorgesehen sein, dass eine Dichtlinie des Dichtelements an der ersten Bipolarplattenlage sich - längs der Stapelrichtung der elektrochemischen Vorrichtung gesehen - mit der Verbindungs-Schweißnaht kreuzt oder dieselbe berührt.

Dadurch, dass sich Dichtlinien und Verbindungs-Schweißnähte - in der Stapelrichtung gesehen - kreuzen, überlappen und/oder berühren können, kann der Abstand zwischen den Verbindungs-Schweißnähten und den Dichtlinien an der Bipolarplatte deutlich reduziert werden. Hierdurch entstehen größere Freiheiten bei der Gestaltung des Aufbaus der elektrochemischen Einheit. Der Platzbedarf für die Unterbringung des Dichtungssystems und des Systems der Verbindungs-Schweißnähte kann erheblich reduziert werden.

Bei einer alternativen Ausgestaltung des erfindungsgemäßen Verfahrens kann jedoch vorgesehen sein, dass keine Dichtlinie des Dichtelements an der ersten Bipolarplattenlage sich mit der Verbindungs-Schweißnaht - längs der Stapelrichtung der elektrochemischen Vorrichtung gesehen - überlappt, kreuzt, überschneidet und/oder dieselbe berührt.

Durch diese Maßnahme kann die Gefahr einer Beschädigung des Dichtelements durch die während des Schweißvorgangs entstehende Schweißwärme noch weiter reduziert werden.

Bei einer bevorzugten Ausgestaltung der Erfindung ist vorgesehen, dass das Dichtelement mindestens eine Dichtlippe aufweist.

Insbesondere kann vorgesehen sein, dass das Dichtelement mindestens zwei Dichtlippen und einen zwischen den Dichtlippen angeordneten Dichtungs-Zwischenbereich aufweist. Ein solcher Dichtungs-Zwischenbereich kann die Verbindungs-Schweißnaht - längs der Stapelrichtung der elektrochemischen Vorrichtung gesehen - zumindest teilweise, vorzugsweise im Wesentlichen vollständig, überdecken. Durch diesen Dichtungs-Zwischenbereich kann der Isolationswiderstand zwischen zwei einander benachbarten elektrochemischen Einheiten erhöht und/oder eine elektrisch leitende Kontaktierung von zwei längs der Stapelrichtung aufeinanderfolgenden elektrochemischen Einheiten verhindert werden.

Ein solcher Dichtungs-Zwischenbereich kann ferner verhindern, dass während des Schweißvorgangs Verschmutzungen, Gase oder Ähnliches durch die der Schweißenergiequelle abgewandte Oberfläche der ersten Bipolarplattenlage austreten.

Bei einer bevorzugten Ausgestaltung der Erfindung ist vorgesehen, dass mindestens eine Dichtlinie des Dichtelements einen Mediumkanal der elektrochemischen Vorrichtung, einen elektrochemisch aktiven Bereich einer elektrochemischen Einheit der elektrochemischen Vorrichtung und/oder ein Strömungsfeld der elektrochemischen Vorrichtung umgibt.

Ein solcher Mediumkanal erstreckt sich vorzugsweise im Wesentlichen parallel zu der Stapelrichtung durch die elektrochemische Vorrichtung.

Ein solcher Mediumkanal dient der Zufuhr eines für den Betrieb der elektrochemischen Vorrichtung benötigten fluiden Mediums, beispielsweise eines Anodengases, eines Kathodengases oder eines Kühlmediums, zu den elektrochemischen Einheiten der elektrochemischen Vorrichtung oder der Abfuhr eines solchen fluiden Mediums, beispielsweise eines Anodengases, eines Kathodengases oder eines Kühlmediums, aus den elektrochemischen Einheiten der elektrochemischen Vorrichtung.

Bei einer bevorzugten Ausgestaltung der Erfindung ist vorgesehen, dass das Dichtelement an der im montierten Zustand der elektrochemischen Vorrichtung der zweiten Bipolarplattenlage abgewandten Seite der ersten Bipolarplattenlage erzeugt wird.

Vorzugsweise ist vorgesehen, dass an der im montierten Zustand der elektrochemischen Vorrichtung der zweiten Bipolarplattenlage zugewandten Seite der ersten Bipolarplattenlage kein Dichtelement aus einem elastischen Material erzeugt wird.

Ferner kann vorgesehen sein, dass an der zweiten Bipolarplattenlage kein Dichtelement aus einem elastischen Material erzeugt wird.

Grundsätzlich kann allerdings vorgesehen sein, dass an der der zweiten Bipolarplattenlage zugewandten Seite der ersten Bipolarplattenlage und/oder an der zweiten Bipolarplattenlage ein Dichtelement aus einem elastischen Material ausgebildet ist, welches beispielsweise der elektrischen Isolation zwischen zwei benachbarten Bipolarplatten innerhalb der elektrochemischen Vorrichtung dienen kann, wobei dann eine Beschädigung von Bereichen dieses Dichtelements in Kauf genommen wird.

Vorzugsweise ist die erste Bipolarplattenlage aus einem ersten metallischen Material gebildet und die zweite Bipolarplattenlage aus einem zweiten metallischen Material gebildet.

Grundsätzlich kann vorgesehen sein, dass das erste metallische Material und das zweite metallische Material miteinander identisch sind.

Als besonders günstig erwiesen hat es sich allerdings, wenn das erste metallische Material von dem zweiten metallischen Material verschieden ist und insbesondere eine höhere Wärmeleitfähigkeit aufweist als das zweite metallische Material.

Die vorliegende Erfindung betrifft ferner eine Bipolarplatte für eine elektrochemische Vorrichtung, welche
eine erste Bipolarplattenlage, an der ein Dichtelement aus einem elastischen Material gebildet ist, und
eine zweite Bipolarplattenlage, die mit der ersten Bipolarplattenlage durch Verschweißung längs mindestens einer Verbindungs-Schweißnaht verbunden ist, umfasst.

Der vorliegenden Erfindung liegt die weitere Aufgabe zugrunde, eine solche Bipolarplatte für eine elektrochemische Vorrichtung zu schaffen, bei welcher eine Beschädigung des Dichtelements an der ersten Bipolarplattenlage während der Verschweißung der ersten Bipolarplattenlage mit der zweiten Bipolarplattenlage zuverlässig ausgeschlossen ist und bei welcher vorzugsweise eine größere Gestaltungsfreiheit hinsichtlich der Anordnung der Dichtlinien und der Verbindungs-Schweißnähte besteht.

Diese Aufgabe wird bei einer Bipolarplatte für eine elektrochemische Vorrichtung mit den Merkmalen des Oberbegriffs von Anspruch 15 erfindungsgemäß dadurch gelöst, dass die Verbindungs-Schweißnaht die zweite Bipolarplattenlage vollständig durchdringt und die erste Bipolarplattenlage nicht vollständig durchdringt.

Vorzugsweise ist die erfindungsgemäße Bipolarplatte mittels des erfindungsgemäßen Verfahrens zum Herstellen einer Bipolarplatte für eine elektrochemische Vorrichtung hergestellt.

Besondere Ausgestaltungen der erfindungsgemäßen Bipolarplatte für eine elektrochemische Vorrichtung sind bereits vorstehend im Zusammenhang mit besonderen Ausgestaltungen des erfindungsgemäßen Verfahrens zum Herstellen einer Bipolarplatte für eine elektrochemische Vorrichtung erläutert worden.

Das Dichtelement umfasst vorzugsweise ein Elastomermaterial und ist besonders bevorzugt im Wesentlichen vollständig aus einem Elastomermaterial gebildet.

Das Dichtelement kann beispielsweise durch einen Spritzgießvorgang, durch einen Musterdruckvorgang, insbesondere einen Siebdruckvorgang, oder durch einen Dispenserauftragsvorgang an der ersten Bipolarplatte erzeugt werden.

Die vorliegende Erfindung ermöglicht es, ein Dichtelement in einem Vorgang mit relativ geringem Aufwand an eine Bipolarplattenlage einer Bipolarplatte anzubinden und die Bipolarplattenlage, welche mit dem Dichtelement versehen ist, in einem nachgelagerten Schweißvorgang mit einer weiteren Bipolarplattenlage zu einer mindestens zweilagigen Bipolarplatte zu verbinden.

Im Bereich der Verbindungs-Schweißnaht kann auf einer Seite der Bipolarplatte oder auf zwei Seiten der Bipolarplatte Dichtungsmaterial vorgesehen sein, welches das Austreten von Verschmutzungen während des Schweißvorgangs verhindert, so dass eine Kontamination von Bestandteilen der elektrochemischen Einheit verhindert wird und sich eine aufwändige Reinigung der Bipolarplatte nach dem Schweißvorgang erübrigt.

Die Verbindungs-Schweißnaht, also der Bereich, in dem sich während des Schweißvorgangs das Schmelzbad befindet, erstreckt sich längs der Stapelrichtung der elektrochemischen Einheiten der elektrochemischen Vorrichtung über eine Höhe Hs, welche kleiner ist als die Summe der Materialstärke H₁ der ersten Bipolarplattenlage und der Materialstärke H₂ der zweiten Bipolarplattenlage im Bereich der Verbindungs-Schweißnaht.

Somit durchdringt die Verbindungs-Schweißnaht die während des Schweißvorgangs der Schweißenergiequelle zugewandte Bipolarplattenlage vollständig, die der Schweißenergiequelle während des Schweißvorgangs abgewandte Bipolarplattenlage jedoch nur zu einem Teil.

Die Schweißenergiequelle kann insbesondere einen Laser umfassen und/oder als ein Laser ausgebildet sein.

Die Wärmeleitungsbeschichtung kann nur bereichsweise oder vollflächig auf die erste Bipolarplattenlage oder auf die zweite Bipolarplattenlage aufgebracht werden.

Bei einer bevorzugten Ausgestaltung der Erfindung ist vorgesehen, dass das mindestens eine Dichtelement, das stoffschlüssig mit der Bipolarplatte verbunden wird, für die Abdichtung eines Mediumkanals der elektrochemischen Vorrichtung vorgesehen ist.

Ein Dichtelement, welches den elektrochemisch aktiven Bereich einer elektrochemischen Einheit und/oder ein Strömungsfeld der elektrochemischen Einheit gegenüber einem Mediumkanal, gegenüber einem anderen Strömungsfeld und/oder gegenüber dem Außenraum der elektrochemischen Vorrichtung abdichtet, kann beispielsweise an einen Bestandteil einer Membran-Elektroden-Anordnung der elektrochemischen Einheit, insbesondere an eine Gasdiffusionslage, angebunden sein.

Ein solches Strömungsfeld-Dichtelement kann insbesondere zweiteilig ausgebildet sein, wobei ein anodenseitiger Teil des Dichtelements an die anodenseitige Gasdiffusionslage und ein kathodenseitiger Teil des Dichtelements an die kathodenseitige Gasdiffusionslage angebunden ist. Zwischen den anodenseitigen Teil des Dichtelements und die anodenseitige Gasdiffusionslage einerseits und den kathodenseitigen Teil des Dichtelements und die kathodenseitige Gasdiffusionslage andererseits wird beim Assemblieren der elektrochemischen Vorrichtung eine Membran, beispielsweise eine mit einem Katalysator beschichtete Membran, eingelegt.

Die elektrochemische Vorrichtung, in welcher die erfindungsgemäße Bipolarplatte verwendet wird, umfasst vorzugsweise mindestens eine Polymer-Elektrolyt-Membran (PEM).

Bei einer bevorzugten Ausgestaltung der Erfindung wird ein Dichtelement auf eine erste Bipolarplattenlage einer Bipolarplatte für eine elektrochemische Vorrichtung aufgebracht, und in einem nachfolgenden Schweißvorgang wird diese Bipolarplattenlage mit einer weiteren Bipolarplattenlage so verschweißt, dass die Verbindungs-Schweißnähte und die Dichtlinien der an der ersten Bipolarplattenlage erzeugten Dichtelemente - längs der Stapelrichtung der elektrochemischen Vorrichtung gesehen - übereinander liegen, sich kreuzen oder sich zumindest teilweise überlappen oder berühren.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine ausschnittsweise schematische Draufsicht auf eine Bipolarplatte einer elektrochemischen Einheit einer mehrere längs einer Stapelrichtung aufeinanderfolgende elektrochemische Einheiten umfassenden elektrochemischen Vorrichtung, im Bereich eines Kathodengas-Zuführkanals, eines Kühlmedium-Zuführkanals und eines Anodengas-Abführkanals;
- Fig. 2: einen ausschnittsweisen schematischen Querschnitt durch die Bipolarplatte aus Fig. 1 im Bereich einer Verbindungs-Schweißnaht, durch welche eine erste Bipolarplattenlage und eine zweite Bipolarplattenlage der Bipolarplatte miteinander verbunden sind;
- Fig. 3: einen der Fig. 2 entsprechenden schematischen Querschnitt durch eine zweite Ausführungsform der Bipolarplatte, bei welcher zwischen der ersten Bipolarplattenlage und der zweiten Bipolarplattenlage eine Wärmeleitungsbeschichtung vorgesehen ist;
- Fig. 4: eine ausschnittsweise schematische Draufsicht auf eine dritte Ausführungsform einer Bipolarplatte einer elektrochemischen Einheit einer mehrere längs einer Stapelrichtung aufeinanderfolgende elektrochemische Einheiten umfassenden elektrochemischen Vorrichtung, im Bereich eines Kathodengas-Zuführkanals, eines Kühlmedium-Zuführkanals und eines Anodengas-Abführkanals;
- Fig. 5: einen ausschnittsweisen schematischen Querschnitt durch die Bipolarplatte aus Fig. 4, im Bereich einer Verbindungs-Schweißnaht, durch welche eine erste Bipolarplattenlage und eine zweite Bipolarplattenlage der Bipolarplatte miteinander verbunden sind.

Gleiche oder funktional äquivalente Elemente sind in allen Figuren mit denselben Bezugszeichen bezeichnet.

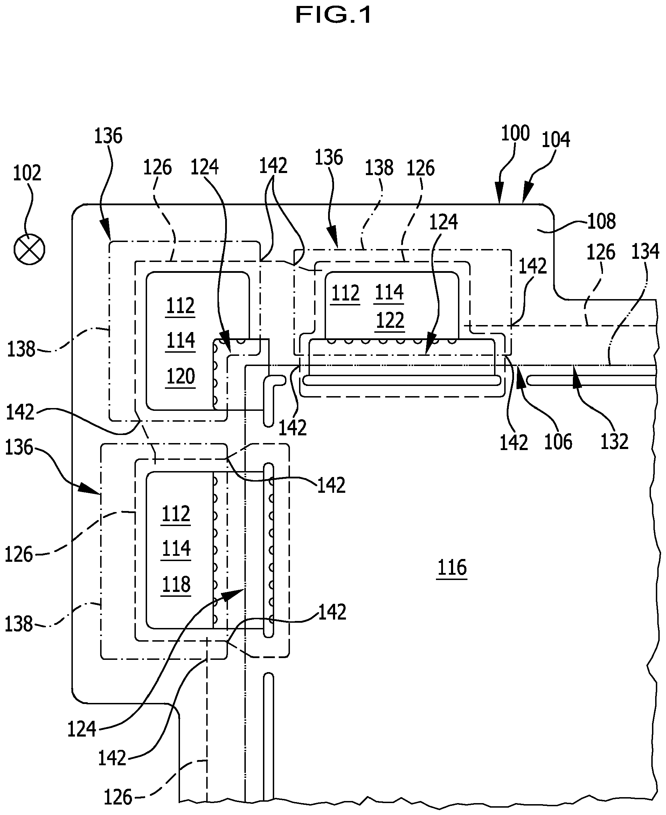

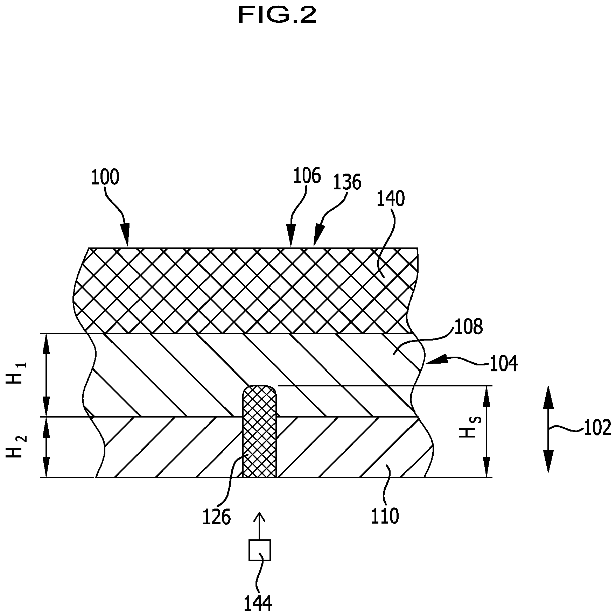

Eine in den Fig. 1 und 2 ausschnittsweise dargestellte, als Ganzes mit 100 bezeichnete elektrochemische Vorrichtung, beispielsweise eine Brennstoffzellenvorrichtung oder ein Elektrolyseur, umfasst einen Stapel, der mehrere in einer Stapelrichtung 102 aufeinanderfolgende elektrochemische Einheiten, beispielsweise Brennstoffzelleneinheiten oder Elektrolyseeinheiten, und eine (nicht dargestellte) Spannvorrichtung zum Beaufschlagen der elektrochemischen Einheiten mit einer längs der Stapelrichtung 102 gerichteten Spannkraft umfasst.

Jede elektrochemische Einheit der elektrochemischen Vorrichtung 100 umfasst jeweils eine Bipolarplatte 104, eine (nicht dargestellte) Membran-Elektroden-Anordnung (MEA) und ein Dichtungssystem 106.

Die Membran-Elektroden-Anordnung umfasst beispielsweise eine katalysatorbeschichtete Membran ("catalyst coated membrane"; CCM) und zwei Gasdiffusionslagen, wobei eine erste Gasdiffusionslage anodenseitig und eine zweite Gasdiffusionslage kathodenseitig angeordnet ist.

Die Bipolarplatte 104 umfasst eine erste Bipolarplattenlage 108 und eine zweite Bipolarplattenlage 110 (siehe Fig. 2).

Die erste Bipolarplattenlage 108 ist vorzugsweise aus einem ersten metallischen Material gebildet, und die zweite Bipolarplattenlage 110 ist vorzugsweise aus einem zweiten metallischen Material gebildet.

Vorzugsweise weist das erste metallische Material eine höhere Wärmeleitfähigkeit auf als das zweite metallische Material.

Die Bipolarplatte 104 weist mehrere Medium-Durchtrittsöffnungen 112 auf, durch welche jeweils ein der elektrochemischen Vorrichtung 100 zuzuführendes fluides Medium (im Falle einer Brennstoffzellenvorrichtung beispielsweise ein Anodengas, ein Kathodengas oder ein Kühlmedium) durch die Bipolarplatte 104 hindurchtreten kann.

Die Medium-Durchtrittsöffnungen 112 der im Stapel aufeinanderfolgenden Bipolarplatten 104 und die in der Stapelrichtung 102 zwischen den Medium-Durchtrittsöffnungen 112 liegenden Zwischenräume bilden zusammen jeweils einen Mediumkanal 114.

Jedem Mediumkanal 114, durch welchen ein fluides Medium der elektrochemischen Vorrichtung 100 zuführbar ist, ist jeweils mindestens ein anderer Mediumkanal 114 zugeordnet, durch welchen das betreffende fluide Medium aus der elektrochemischen Vorrichtung 100 abführbar ist.

Durch ein dazwischenliegendes Strömungsfeld 116, welches vorzugsweise an einer Oberfläche einer benachbarten Bipolarplatte 104 oder (beispielsweise im Falle eines Kühlmedium-Strömungsfelds) im Zwischenraum zwischen der ersten Bipolarplattenlage 108 und der zweiten Bipolarplattenlage 110 der mehrlagigen Bipolarplatte 104 ausgebildet ist, kann das Medium aus dem ersten Mediumkanal 114 quer, vorzugsweise im Wesentlichen senkrecht, zu der Stapelrichtung 102 zu dem zweiten Mediumkanal 114 strömen.

In Fig. 1 sind beispielsweise ein Mediumkanal 118 für ein Kathodengas der elektrochemischen Vorrichtung 100, ein Mediumkanal 120 für ein Kühlmedium der elektrochemischen Vorrichtung 100 und ein Mediumkanal 122 für ein Anodengas der elektrochemischen Vorrichtung 100 dargestellt.

Durch jeweils eine Strömungspforte 124 steht jeder Mediumkanal 114 in Fluidverbindung mit dem jeweils zugeordneten Strömungsfeld 116.

Die erste Bipolarplattenlage 108 und die zweite Bipolarplattenlage 110 der Bipolarplatte 104 sind längs Verbindungs-Schweißnähten 126, welche in Fig. 1 in gebrochenen Linien dargestellt sind, vorzugsweise durch Laserschweißung, stoffschlüssig und fluiddicht aneinander festgelegt.

Ein unerwünschtes Austreten der fluiden Medien aus den Mediumkanälen 114 und den Strömungsfeldern 116 der elektrochemischen Vorrichtung 100 wird durch das Dichtungssystem 106 vermieden.

Das Dichtungssystem 106 umfasst eine Strömungsfeld-Dichtungsanordnung 132, welche sich um die Strömungsfelder 116 herum erstreckt. Die Dichtlinien 134 dieser Strömungsfeld-Dichtungsanordnung 132 sind in der Draufsicht von Fig. 1 durch strichdoppelpunktierte Linien dargestellt.

Ferner umfasst das Dichtungssystem 106 mehrere Mediumkanal-Dichtungsanordnungen 136, welche sich um jeweils einen Mediumkanal 114 herum erstrecken. Die Dichtlinien 138 dieser Mediumkanal-Dichtungsanordnungen 136 sind in der Draufsicht von Fig. 1 durch strichpunktierte Linien dargestellt.

Die Strömungsfeld-Dichtungsanordnung 132 kann ein erstes Strömungsfeld-Dichtelement, welches an einer (beispielsweise anodenseitigen) ersten Gasdiffusionslage festgelegt ist, und ein zweites Strömungsfeld-Dichtelement, welches an einer (beispielsweise kathodenseitigen) zweiten Gasdiffusionslage festgelegt ist, umfassen.

Die Strömungsfeld-Dichtelemente sind vorzugsweise mittels eines Spritzgießvorgangs, eines Musterdruckvorgangs, insbesondere eines Siebdruckvorgangs, oder eines Dispenserauftragsvorgangs an der jeweils zugeordneten Gasdiffusionslage erzeugt.

Die Strömungsfeld-Dichtelemente umfassen vorzugsweise ein Elastomermaterial und können insbesondere im Wesentlichen vollständig aus einem Elastomermaterial gebildet sein.

Jedes der Strömungsfeld-Dichtelemente liegt im montierten Zustand der elektrochemischen Vorrichtung 100 fluiddicht an jeweils einer Bipolarplattenlage 108 oder 110 an, ohne an der betreffenden Bipolarplattenlage 108 beziehungsweise 110 festgelegt zu sein.

Jede der Mediumkanal-Dichtungsanordnungen 136 umfasst jeweils ein Dichtelement 140, welches an der der zweiten Bipolarplattenlage 110 abgewandten Seite der ersten Bipolarplattenlage 108 festgelegt ist.

Im montierten Zustand der elektrochemischen Vorrichtung 100 liegt das Dichtelement 140 an der Bipolarplatte 104 einer in der Stapelrichtung 102 benachbarten elektrochemischen Einheit fluiddicht an.

Das Dichtelement 140 kann beispielsweise mittels eines Spritzgießvorgangs, eines Musterdruckvorgangs, insbesondere eines Siebdruckvorgangs, oder eines Dispenserauftragsvorgangs an der ersten Bipolarplattenlage 108 erzeugt sein.

Das Dichtelement 140 umfasst vorzugsweise ein Elastomermaterial und kann insbesondere im Wesentlichen vollständig aus einem Elastomermaterial gebildet sein.

Das Dichtelement 140 ist an der ersten Bipolarplattenlage 108 erzeugt worden, bevor die erste Bipolarplattenlage 108 und die zweite Bipolarplattenlage 110 aneinander festgelegt worden sind.

Die Verbindungs-Schweißnähte 126, längs welcher die erste Bipolarplattenlage 108 und die zweite Bipolarplattenlage 110 aneinander festgelegt sind, überschneiden sich - längs der Stapelrichtung 102 gesehen - mit den Dichtelementen 140 der Mediumkanal-Dichtungsanordnungen 136 an Kreuzungsstellen 142 (siehe Fig. 1).

Dadurch, dass die Verbindungs-Schweißnähte 126 und die Dichtelemente 140 sich (in der Stapelrichtung 102 gesehen) kreuzen, überlappen und berühren können, und dadurch, dass kein Mindestabstand zwischen den Verbindungs-Schweißnähten 126 einerseits und den Dichtelementen 140 andererseits senkrecht zur Stapelrichtung 102 eingehalten werden muss, entstehen große Freiheiten in der Gestaltung des Aufbaus der Bipolarplatte 104 und der elektrochemischen Einheiten der elektrochemischen Vorrichtung 100. Der Platzbedarf für die Dichtelemente 140 und die Verbindungs-Schweißnähte 126 kann deutlich reduziert werden.

Auf der der zweiten Bipolarplattenlage 110 abgewandten Seite der ersten Bipolarplattenlage 108 können zwischen den Dichtlinien 138 der Dichtelemente 140 zusätzliche Dichtungs-Zwischenbereiche vorgesehen sein, welche eine elektrisch leitende Kontaktierung zwischen zwei im Stapel einander benachbarten elektrochemischen Einheiten verhindern und/oder den elektrischen Isolationswiderstand zwischen zwei im Stapel einander benachbarten elektrochemischen Einheiten erhöhen.

Zur Herstellung der vorstehend beschriebenen Bipolarplatte 104 für die elektrochemische Vorrichtung 100 wird wie folgt vorgegangen:
An der ersten Bipolarplattenlage 108 werden die Dichtelemente 140 aus einem elastischen Material, vorzugsweise aus einem Elastomermaterial, erzeugt.

Vorzugsweise werden die Dichtelemente 140 mittels eines Spritzgießvorgangs an der ersten Bipolarplattenlage 108 erzeugt.

Alternativ hierzu kann auch vorgesehen sein, dass die Dichtelemente 140 mittels eines Musterdruckvorgangs, insbesondere eines Siebdruckvorgangs, oder eines Dispenserauftragsvorgangs an der ersten Bipolarplattenlage 108 erzeugt werden.

Nach der Erzeugung der Dichtelemente 140 an der ersten Bipolarplattenlage 108 wird die erste Bipolarplattenlage 108 mit der zweiten Bipolarplattenlage 110 durch Verschweißung, insbesondere durch Laserverschweißung, längs der Verbindungs-Schweißnähte 126 verbunden.

Dabei wird die erste Bipolarplattenlage 108 so an der zweiten Bipolarplattenlage 110 positioniert, dass die an der ersten Bipolarplattenlage 108 gebildeten Dichtelemente 140 auf der der zweiten Bipolarplattenlage 110 abgewandten Seite der ersten Bipolarplattenlage 108 angeordnet sind.

Der Schweißvorgang wird so durchgeführt, dass eine Schweißenergiequelle 144 (siehe Fig. 2), insbesondere ein Laser, auf der der ersten Bipolarplattenlage 108 abgewandten Seite der zweiten Bipolarplattenlage 110 angeordnet ist, so dass während des Schweißvorgangs die zweite Bipolarplattenlage 110 der Schweißenergiequelle 144 zugewandt ist.

Ferner wird der Schweißvorgang so durchgeführt, dass ein mittels der Schweißenergiequelle im Material der zweiten Bipolarplattenlage 130 und im Material der ersten Bipolarplattenlage 108 erzeugtes Schmelzbad die zweite Bipolarplattenlage 110 vollständig durchdringt, aber die erste Bipolarplattenlage 108 nicht vollständig durchdringt.

Auf diese Weise wird eine Verbindungs-Schweißnaht 126 gebildet, deren Eindringtiefe H_{S} größer ist als die Materialstärke H₂ der zweiten Bipolarplattenlage 110 im Bereich der Verbindungs-Schweißnaht 126, aber kleiner ist als die Summe der Materialstärke H₂ der zweiten Bipolarplattenlage 110 und der Materialstärke H₁ der ersten Bipolarplattenlage 108 im Bereich der Verbindungs-Schweißnaht 126.

Hierdurch bleibt das an der ersten Bipolarplattenlage 108 gebildete Dichtelement 140, welches die Verbindungs-Schweißnaht 126 - längs der Stapelrichtung 102 gesehen - kreuzt (siehe Fig. 2), unbeschädigt.

Auf der der zweiten Bipolarplattenlage 110 abgewandten Seite der ersten Bipolarplattenlage 108 bilden sich keine Schweißraupe, keine Verschmutzungen und kein Zunder.

Verschmutzungen, die auf der der Schweißenergiequelle 144 zugewandten Seite der zweiten Bipolarplattenlage 110 während des Schweißvorgangs entstehen, können nach dem Schweißvorgang ohne Weiteres durch einen Reinigungsprozess entfernt werden, da sich dort kein Material eines Dichtelements 140 befindet.

Die Materialstärke H₁ der ersten Bipolarplattenlage 108 im Bereich der Verbindungs-Schweißnaht 126 ist vorzugsweise größer als die Materialstärke H₂ der zweiten Bipolarplattenlage 110 im Bereich der Verbindungs-Schweißnaht (126).

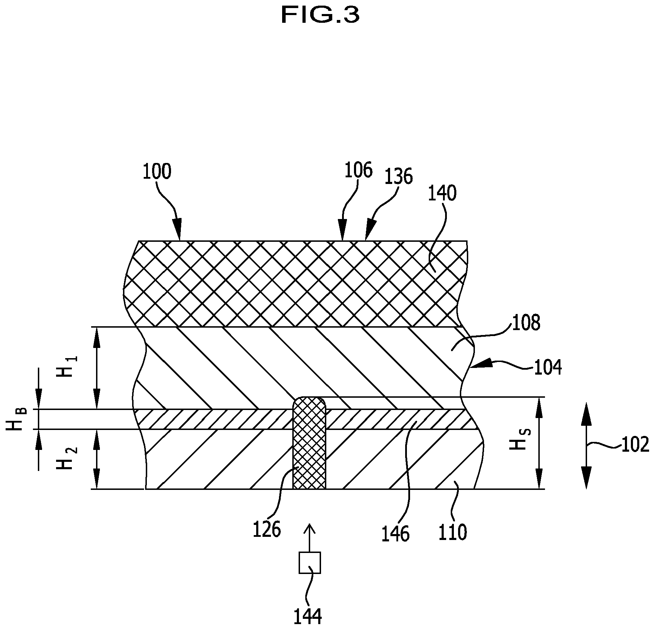

Eine in Fig. 3 ausschnittsweise dargestellte zweite Ausführungsform einer Bipolarplatte 104 für eine elektrochemische Vorrichtung 100 unterscheidet sich von der in den Fig. 1 und 2 dargestellten ersten Ausführungsform dadurch, dass zwischen der ersten Bipolarplattenlage 108 und der zweiten Bipolarplattenlage 110 eine Wärmeleitungsbeschichtung 146 vorgesehen ist.

Vorzugsweise ist vorgesehen, dass die Wärmeleitungsbeschichtung 146 an der der zweiten Bipolarplattenlage 110 zugewandten Seite der ersten Bipolarplattenlage 108 der Bipolarplatte 104 gebildet ist.

Das Material der Wärmeleitungsbeschichtung 146 weist eine Wärmeleitfähigkeit auf, welche größer ist als die Wärmeleitfähigkeit des ersten Materials, aus welchem die erste Bipolarplattenlage 108 gebildet ist.

Vorzugsweise ist die Wärmeleitfähigkeit des Materials der Wärmeleitungsbeschichtung 146 auch größer als die Wärmeleitfähigkeit des zweiten Materials, aus dem die zweite Bipolarplattenlage 110 gebildet ist.

Im Übrigen stimmt die in Fig. 3 dargestellte zweite Ausführungsform einer Bipolarplatte 104 für eine elektrochemische Vorrichtung 100 hinsichtlich Aufbau, Funktion und Herstellungsweise mit der in den Fig. 1 und 2 dargestellten ersten Ausführungsform überein, auf deren vorstehende Beschreibung insoweit Bezug genommen wird.

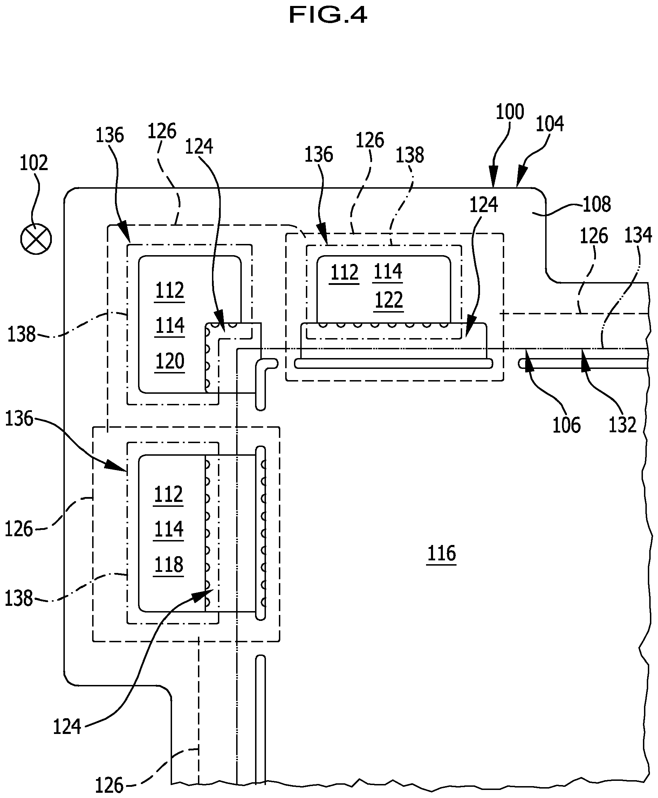

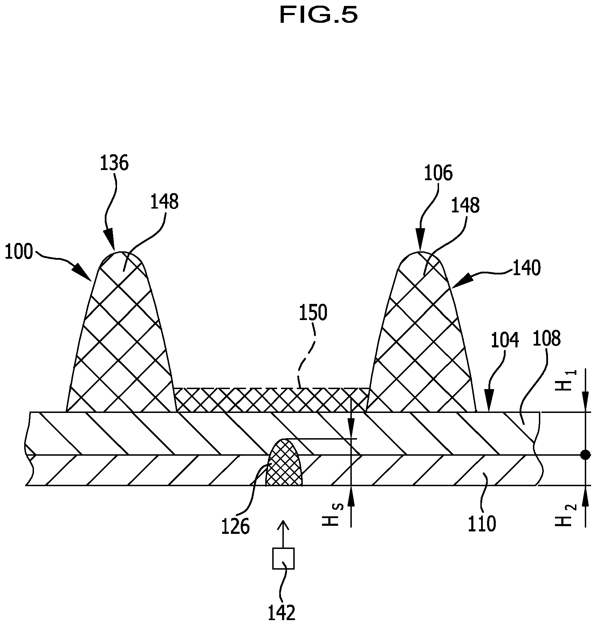

Eine in den Fig. 4 und 5 ausschnittsweise dargestellte dritte Ausführungsform einer Bipolarplatte 104 für eine elektrochemische Vorrichtung unterscheidet sich von der in den Fig. 1 und 2 dargestellten ersten Ausführungsform dadurch, dass die Verbindungs-Schweißnähte 126, längs welcher die erste Bipolarplattenlage 108 und die zweite Bipolarplattenlage 110 aneinander festgelegt sind, die Dichtlinien 138 der Dichtelemente 140 an der ersten Bipolarplattenlage 108 - längs der Stapelrichtung 102 gesehen - nicht kreuzen, wodurch eine Gefahr der Beschädigung der Dichtelemente 140 durch die beim Schweißvorgang entstehende Schweißwärme reduziert wird.

Das Dichtelement 140 kann eine oder mehrere Dichtlippen 148 aufweisen.

Zwischen zwei Dichtlippen 148 kann ein Dichtungs-Zwischenbereich 150 vorgesehen sein, in welchem das Dichtelement 140 eine geringere Höhe (Ausdehnung längs der Stapelrichtung 102) aufweist als im Bereich der Dichtlippen 148.

Insbesondere kann vorgesehen sein, dass ein solcher Dichtungs-Zwischenbereich 150 die Verbindungs-Schweißnaht 126 zumindest teilweise, vorzugsweise im Wesentlichen vollständig, überdeckt (siehe Fig. 5).

Ein solcher Dichtungs-Zwischenbereich 150 schützt vor einer elektrisch leitfähigen Kontaktierung zweier im Stapel einander benachbarter Bipolarplatten 104.

Dadurch, dass der Dichtungs-Zwischenbereich 150 die Verbindungs-Schweißnaht 126 (in der Stapelrichtung 102 gesehen) zumindest teilweise oder vollflächig überdeckt, kann verhindert werden, dass Verschmutzungen, beispielsweise Gase, während des Schweißvorgangs im Bereich der Verbindungs-Schweißnaht 126 durch die der zweiten Bipolarplattenlage 110 abgewandte Oberfläche 152 der ersten Bipolarplattenlage 108 austreten.

Bei dieser Ausführungsform kann die Materialstärke H₁ der ersten Bipolarplattenlage 108 im Bereich der Verbindungs-Schweißnaht 126 größer sein als die Materialstärke H₂ der zweiten Bipolarplattenlage 110 im Bereich der Verbindungs-Schweißnaht 126, gleich groß sein wie die Materialstärke H₂ der zweiten Bipolarplattenlage 110 im Bereich der Verbindungs-Schweißnaht 126 oder kleiner sein als die Materialstärke H₂ der zweiten Bipolarplattenlage 110 im Bereich der Verbindungs-Schweißnaht 126.

Im Übrigen stimmt die in den Fig. 4 und 5 dargestellte dritte Ausführungsform der Bipolarplatte 104 für eine elektrochemische Vorrichtung 100 hinsichtlich Aufbau, Funktion und Herstellungsweise mit der in den Fig. 1 und 2 dargestellten ersten Ausführungsform überein, auf deren vorstehende Beschreibung insoweit Bezug genommen wird.

## Patentansprüche

1. Verfahren zum Herstellen einer mehrlagigen Bipolarplatte (104) für eine elektrochemische Vorrichtung (100), umfassend Folgendes:
- Erzeugen mindestens eines Dichtelements (140) aus einem elastischen Material an einer ersten Bipolarplattenlage (108) der Bipolarplatte (104);
- Verbinden der ersten Bipolarplattenlage (108) der Bipolarplatte (104) mit dem daran erzeugten Dichtelement (140) und einer zweiten Bipolarplattenlage (110) der Bipolarplatte (104) durch Verschweißung mittels einer Schweißenergiequelle (144) längs mindestens einer Verbindungs-Schweißnaht (126);
**dadurch gekennzeichnet,**
**dass** während des Schweißvorgangs die zweite Bipolarplattenlage (110) der Schweißenergiequelle (144) zugewandt ist und
**dass** während des Schweißvorgangs ein mittels der Schweißenergiequelle (144) erzeugtes Schmelzbad die erste Bipolarplattenlage (108) nicht vollständig durchdringt.

2. Verfahren nach Anspruch 1, **dadurch gekennzeichnet, dass** im Bereich der Verbindungs-Schweißnaht (126) die Materialstärke (H₁) der ersten Bipolarplattenlage (108) größer ist als die Materialstärke (H₂) der zweiten Bipolarplattenlage (110).

3. Verfahren nach einem der Ansprüche 1 oder 2, **dadurch gekennzeichnet, dass** im Bereich der Verbindungs-Schweißnaht (126) eine Wärmeleitungsbeschichtung (146) vorgesehen ist.

4. Verfahren nach Anspruch 3, **dadurch gekennzeichnet, dass** die Wärmeleitungsbeschichtung (146) an der ersten Bipolarplattenlage (108) gebildet ist.

5. Verfahren nach einem der Ansprüche 1 bis 4, **dadurch gekennzeichnet, dass** eine Dichtlinie (138) des Dichtelements (140) an der ersten Bipolarplattenlage (108) sich mit der Verbindungs-Schweißnaht (126) überlappt.

6. Verfahren nach einem der Ansprüche 1 bis 4, **dadurch gekennzeichnet, dass** keine Dichtlinie (138) des Dichtelements (140) an der ersten Bipolarplattenlage (108) sich mit der Verbindungs-Schweißnaht (126) überlappt.

7. Verfahren nach einem der Ansprüche 1 bis 6, **dadurch gekennzeichnet, dass** das Dichtelement (140) mindestens eine Dichtlippe (148) aufweist.

8. Verfahren nach Anspruch 7, **dadurch gekennzeichnet, dass** das Dichtelement (140) mindestens zwei Dichtlippen (148) und einen zwischen den Dichtlippen (148) angeordneten Dichtungs-Zwischenbereich (150) aufweist.

9. Verfahren nach Anspruch 8, **dadurch gekennzeichnet, dass** der Dichtungs-Zwischenbereich (150) die Verbindungs-Schweißnaht (126) zumindest teilweise überdeckt.

10. Verfahren nach einem der Ansprüche 1 bis 9, **dadurch gekennzeichnet, dass** mindestens eine Dichtlinie (138) des Dichtelements (140) einen Mediumkanal (114) der elektrochemischen Vorrichtung (100) umgibt.

11. Verfahren nach einem der Ansprüche 1 bis 10, **dadurch gekennzeichnet, dass** das Dichtelement (140) an der im montierten Zustand der elektrochemischen Vorrichtung (100) der zweiten Bipolarplattenlage (110) abgewandten Seite der ersten Bipolarplattenlage (108) erzeugt wird.

12. Verfahren nach einem der Ansprüche 1 bis 11, **dadurch gekennzeichnet, dass** an der im montierten Zustand der elektrochemischen Vorrichtung (100) der zweiten Bipolarplattenlage (110) zugewandten Seite der ersten Bipolarplattenlage (108) kein Dichtelement (140) aus einem elastischen Material erzeugt wird.

13. Verfahren nach einem der Ansprüche 1 bis 12, **dadurch gekennzeichnet, dass** an der zweiten Bipolarplattenlage (110) kein Dichtelement (140) aus einem elastischen Material erzeugt wird.

14. Verfahren nach einem der Ansprüche 1 bis 13, **dadurch gekennzeichnet, dass** die erste Bipolarplattenlage (108) aus einem ersten metallischen Material gebildet ist und die zweite Bipolarplattenlage (110) aus einem zweiten metallischen Material gebildet ist, wobei das erste metallische Material eine höhere Wärmeleitfähigkeit aufweist als das zweite metallische Material.

15. Bipolarplatte für eine elektrochemische Vorrichtung (100), umfassend eine erste Bipolarplattenlage (108), an der ein Dichtelement (140) aus einem elastischen Material gebildet ist, und
eine zweite Bipolarplattenlage (110), die mit der ersten Bipolarplattenlage (108) durch Verschweißung längs mindestens einer Verbindungs-Schweißnaht (126) verbunden ist,
**dadurch gekennzeichnet,**
**dass** die Verbindungs-Schweißnaht (126) die zweite Bipolarplattenlage (110) vollständig durchdringt und die erste Bipolarplattenlage (108) nicht vollständig durchdringt.

## Claims

1. Method for producing a multi-layer bipolar plate (104) for an electrochemical device (100), comprising the following:
- producing at least one sealing element (140) made of an elastic material on a first bipolar plate layer (108) of the bipolar plate (104);
- connecting the first bipolar plate layer (108) of the bipolar plate (104) with the sealing element (140) produced thereon and a second bipolar plate layer (110) of the bipolar plate (104) by welding by means of a welding energy source (144) along at least one connection welding seam (126);
**characterized in that**
during the welding operation, the second bipolar plate layer (110) faces toward the welding energy source (144) and
**in that** during the welding operation, a weld pool produced by means of the welding energy source (144) does not completely penetrate the first bipolar plate layer (108).

2. Method in accordance with Claim 1, **characterized in that** in the region of the connection welding seam (126), the material thickness (Hi) of the first bipolar plate layer (108) is greater than the material thickness (H₂) of the second bipolar plate layer (110).

3. Method in accordance with either of Claims 1 or 2, **characterized in that** a thermal conduction coating (146) is provided in the region of the connection welding seam (126).

4. Method in accordance with Claim 3, **characterized in that** the thermal conduction coating (146) is formed on the first bipolar plate layer (108).

5. Method in accordance with any one of Claims 1 to 4, **characterized in that** a sealing line (138) of the sealing element (140) on the first bipolar plate layer (108) overlaps with the connection welding seam (126).

6. Method in accordance with any one of Claims 1 to 4, **characterized in that** no sealing line (138) of the sealing element (140) on the first bipolar plate layer (108) overlaps with the connection welding seam (126).

7. Method in accordance with any one of Claims 1 to 6, **characterized in that** the sealing element (140) has at least one sealing lip (148).

8. Method in accordance with Claim 7, **characterized in that** the sealing element (140) has at least two sealing lips (148) and a seal intermediate region (150) arranged between the sealing lips (148).

9. Method in accordance with Claim 8, **characterized in that** the seal intermediate region (150) at least partially covers the connection welding seam (126).

10. Method in accordance with any one of Claims 1 to 9, **characterized in that** at least one sealing line (138) of the sealing element (140) surrounds a medium channel (114) of the electrochemical device (100).

11. Method in accordance with any one of Claims 1 to 10, **characterized in that** the sealing element (140) is produced on the side of the first bipolar plate layer (108) that faces away from the second bipolar plate layer (110) in the assembled state of the electrochemical device (100).

12. Method in accordance with any one of Claims 1 to 11, **characterized in that** no sealing element (140) made of an elastic material is produced on the side of the first bipolar plate layer (108) that faces toward the second bipolar plate layer (110) in the assembled state of the electrochemical device (100).

13. Method in accordance with any one of Claims 1 to 12, **characterized in that** no sealing element (140) made of an elastic material is produced on the second bipolar plate layer (110).

14. Method in accordance with any one of Claims 1 to 13, **characterized in that** the first bipolar plate layer (108) is made of a first metallic material and the second bipolar plate layer (110) is made of a second metallic material, wherein the first metallic material has a higher thermal conductivity than the second metallic material.

15. Bipolar plate for an electrochemical device (100), comprising a first bipolar plate layer (108) on which a sealing element (140) made of an elastic material is formed, and
a second bipolar plate layer (110), which is connected to the first bipolar plate layer (108) by welding along at least one connection welding seam (126),
**characterized in that**
the connection welding seam (126) completely penetrates the second bipolar plate layer (110) and does not completely penetrate the first bipolar plate layer (108).

## Revendications

1. Procédé pour fabriquer une plaque bipolaire (104) multicouche pour un dispositif électrochimique (100), comprenant ce qui suit :
- la production d'au moins un élément d'étanchéité (140) à partir d'un matériau élastique sur une première couche de plaque bipolaire (108) de la plaque bipolaire (104) ;
- la liaison de la première couche de plaque bipolaire (108) de la plaque bipolaire (104) à l'élément d'étanchéité (140) produit sur celle-ci et d'une deuxième couche de plaque bipolaire (110) de la plaque bipolaire (104) par soudage au moyen d'une source d'énergie de soudage (144) le long d'au moins un cordon de soudure de liaison (126) ;
**caractérisé en ce**
**que** pendant le processus de soudage la deuxième couche de plaque bipolaire (110) est tournée vers la source d'énergie de soudage (144) et
**que** pendant le processus de soudage un bain de fusion produit au moyen de la source d'énergie de soudage (144) ne traverse pas entièrement la première couche de plaque bipolaire (108).

2. Procédé selon la revendication 1, **caractérisé en ce que** dans la zone du cordon de soudure de liaison (126) l'épaisseur de matériau (H₁) de la première couche de plaque bipolaire (108) est supérieure à l'épaisseur de matériau (H₂) de la deuxième couche de plaque bipolaire (110).

3. Procédé selon l'une quelconque des revendications 1 ou 2, **caractérisé en ce que** dans la zone du cordon de soudure de liaison (126) un revêtement thermoconducteur (146) est prévu.

4. Procédé selon la revendication 3, **caractérisé en ce que** le revêtement thermoconducteur (146) est formé sur la première couche de plaque bipolaire (108).

5. Procédé selon l'une quelconque des revendications 1 à 4, **caractérisé en ce qu'**une ligne d'étanchéité (138) de l'élément d'étanchéité (140) sur la première couche de plaque bipolaire (108) chevauche le cordon de soudure de liaison (126).

6. Procédé selon l'une quelconque des revendications 1 à 4, **caractérisé en ce qu'**aucune ligne d'étanchéité (138) de l'élément d'étanchéité (140) sur la première couche de plaque bipolaire (108) ne chevauche le cordon de soudure de liaison (126).

7. Procédé selon l'une quelconque des revendications 1 à 6, **caractérisé en ce que** l'élément d'étanchéité (140) présente au moins une lèvre d'étanchéité (148).

8. Procédé selon la revendication 7, **caractérisé en ce que** l'élément d'étanchéité (140) présente au moins deux lèvres d'étanchéité (148) et une zone intermédiaire d'étanchéité (150) disposée entre les lèvres d'étanchéité (148).

9. Procédé selon la revendication 8, **caractérisé en ce que** la zone intermédiaire d'étanchéité (150) recouvre au moins en partie le cordon de soudure de liaison (126).

10. Procédé selon l'une quelconque des revendications 1 à 9, **caractérisé en ce qu'**au moins une ligne d'étanchéité (138) de l'élément d'étanchéité (140) entoure un canal de milieu (114) du dispositif électrochimique (100).

11. Procédé selon l'une quelconque des revendications 1 à 10, **caractérisé en ce que** l'élément d'étanchéité (140) est produit sur la face de la première couche de plaque bipolaire (108) opposée à la deuxième couche de plaque bipolaire (110) dans l'état monté du dispositif électrochimique (100).

12. Procédé selon l'une quelconque des revendications 1 à 11, **caractérisé en ce qu'**aucun élément d'étanchéité (140) composé d'un matériau élastique n'est produit sur la face de la première couche de plaque bipolaire (108) tournée vers la deuxième couche de plaque bipolaire (110) dans l'état monté du dispositif électrochimique (100).

13. Procédé selon l'une quelconque des revendications 1 à 12, **caractérisé en ce qu'**aucun élément d'étanchéité (140) composé d'un matériau élastique n'est produit sur la deuxième couche de plaque bipolaire (110).

14. Procédé selon l'une quelconque des revendications 1 à 13, **caractérisé en ce que** la première couche de plaque bipolaire (108) est formée d'un premier matériau métallique et la deuxième couche de plaque bipolaire (110) est formée d'un deuxième matériau métallique, dans lequel le premier matériau métallique présente une conductibilité thermique plus grande que le deuxième matériau métallique.

15. Plaque bipolaire pour un dispositif électrochimique (100), comprenant une première couche de plaque bipolaire (108), sur laquelle est formé un élément d'étanchéité (140) composé d'un matériau élastique, et
une deuxième couche de plaque bipolaire (110), qui est reliée à la première couche de plaque bipolaire (108) par soudage le long d'au moins un cordon de soudure de liaison (126),
**caractérisée en ce**
**que** le cordon de soudure de liaison (126) traverse entièrement la deuxième couche de plaque bipolaire (110) et ne traverse pas entièrement la première couche de plaque bipolaire (108).
